# EUROPEAN PATENT SPECIFICATION

(11) **EP 3 953 918 B1**
(45) Date of publication and mention of the grant of the patent: **05.03.2025**
(21) Application number: 20716095.3
(22) Date of filing: 09.04.2020
(51) Int. Cl.: G08B 21/04, G08B 25/01

(54) **FALL DETECTOR**
FALLDETEKTOR
DÉTECTEUR DE CHUTES

(30) Priority: 09.04.2019 EP 19168137
(43) Date of publication of application: 16.02.2022
(73) Proprietor: Sun Chemical B.V., 1382 LV Weesp (NL)
(72) Inventor: DEUTSCH, Dominik Daniel, 67056 Ludwigshafen am Rhein (DE); WEISS, Joerg, 67061 Ludwigshafen am Rhein (DE)
(74) Representative: Altmann Stößel Dick Patentanwälte PartG mbB
(86) International application number: PCT/EP2020/060182
(87) International publication number: WO 2020/208151

(56) References cited:
- GB-A- 2 401 466
- US-A1- 2008 001 735
- US-A1- 2008 129 518
- US-A1- 2018 117 373
- US-A1- 2018 270 549

## Description

### FIELD OF INVENTION

The present invention relates to a safety system for use with a personal protective equipment for working in great heights.

### BACKGROUND OF THE INVENTION

Jobs with the risk of falling from great heights are relatively common and contain the potential for severe to fatal injuries. In order to protect these persons, personal protective equipment has been developed in the prior art which are intended to intercept a fall and protect the person from major injuries. Such a personal protective equipment for working in great heights usually comprises a safety harness, a rope with shock-absorbing elements and an anchor point to which the rope or the shock-absorbing elements can be attached. However, the forces occurring in a fall event quickly reach a level many times the weight force of the falling person and put both the body, the personal protective equipment as well as the anchor point under enormous strain. In this respect, it is the priority that the shock-absorbing elements smoothly absorb the kinetic energy and to avoid a too quick deceleration potentially causing major injuries. After a fall event, the falling person may be unable to free himself either due to his position or his injuries and the falling person needs help from third persons as soon as possible. Further, the person may lose consciousness occurring independent or together with a fall event. In the prior art systems are known for monitoring fall events, for example WO 2016/011507 A1 discloses such a system.

US 2018/117373 A1 discloses a method for detecting a fall of a worker and an apparatus for detecting a fall of a worker.

US 2018/270549 A1 discloses a personal protective equipment with analytical stream processing for safety event detection.

### SUMMARY OF THE INVENTION

In the view of the above, it is an object of the present invention to provide a safety system for use with a personal protective equipment for working in great heights supporting the rescue measures needed for rescuing a fallen and/or unconscious person. Moreover, it is further an object of the present invention to provide a safety system improving the reliability of the personal protective equipment and to support the inspection of the personal protective equipment.

These and other objects, which become apparent upon reading the following description are solved by the subject-matter of the independent claim. The dependent claims refer to preferred embodiments of the invention.

According to the invention, a safety system for use with a personal protective equipment for working in great heights is provided, wherein the safety system comprises: wireless communication means configured to provide a communication with a rescue coordination center; sensor means for providing sensor data comprising at least one acceleration sensor and at least one orientation sensor; evaluation and notification means configured to determine a fall event and/or a loss of consciousness event based on the sensor data and to notify the rescue coordination center via the wireless communication means by sending an alert event message.

A personal protective equipment according to the present invention is defined as any safety device, which a person can use/wear for work at great heights to avoid or intercept a fall event. Such personal protective equipment is subject of regular inspections or continuous monitoring in order to avoid a malfunction or breakdown during use. In particular, a personal protective equipment for working in great heights is a provided by a combination comprising a safety harness, a rope or the like with shock-absorbing elements and an anchor point to which the rope or the shock-absorbing elements can be attached. Such a personal protective equipment may be also be designed for use in potential hazardous environments.

A rescue coordination center according to the present invention can be provided by any communication facility, which is equipped to communicate with the communication means of the safety system and which is able to instruct and coordinate required resources for rescuing a person after a fall event and/or a loss of consciousness event. In practice, a rescue coordination center is a centralized facility, which is able to communicate with several communication means of different safety systems and to coordinate respective measures.

The communication means, which are configured to provide a communication with a rescue coordination center, are preferably provided by means of a mobile network interface, a Long Range Wide Area (LoRaWAN) interface, a Low-Power Wide Area Network (LPWAN) or a Bluetooth interface. With respect to the communication means for providing a communication with the rescue coordination center, it is only required that a sufficient bandwidth is provided for transmitting an alert event message.

The sensor means comprise at least one acceleration sensor and at least one orientation sensor. Therefore, the acceleration and the orientation data, *i.e.* the positioning of the safety system, and thus the positioning of the person using the safety system, can be provided to the evaluation and notification means, which in turn use these data for determining a fall event and/or a loss of consciousness event.

The term "unconsciousness" as used herein refers to a state which occurs when the ability of a human being to maintain an awareness of self and environment is lost. It involves a complete or near-complete lack of responsiveness. The unconsciousness may occur when the person faints.

However, the sensor means are located in a separate sensor device attachable to a personal protective equipment, wherein the wireless communication means, the evaluation and notification means are located in a mobile computer device of the safety system, wherein the sensor device and the mobile computer device comprise communication means, preferably wireless communication means, and most preferably a Bluetooth interface, configured to provide a wireless communication between the sensor device and the mobile computer device.

By arranging the sensor means and the means for communicating with the mobile computer device in a separate sensor device, it is possible that such a sensor device is comparable small, i.e. having a very limited size. Thereby, the sensor device can be attached to the personal protective equipment, e.g. preferably to the safety harness, without being perceived as disturbing during work. Such a small sensor device can, for example, be arranged in a small pocket on the personal protective equipment or fastened with hook and loop fasteners (Velcro) on the personal protective equipment. It is also possible to use several sensor devices and distribute the sensor devices on the personal protective equipment in different places. By means of the latter, it is possible to increase the produced sensor data and thereby the reliability of determining a fall event by the evaluation and notification means. The communication means of the sensor device are preferably configured to only provide a communication with the mobile computer device, i.e. no other communication means are preferably provided in the sensor device. The communication means of the sensor device are configured to transmit the sensor data to the mobile computer device in real time, i.e. the sensor data is transmitted at a speed that allows a real time evaluation by the evaluation and notification means. The communication means of the sensor device are preferably provided by a Bluetooth interface. However, other communication interfaces can be used in addition or alternatively, for example a Wireless Local Area Network (WLAN) interface or a wireless Near Field Communication (NFC) interface.

The mobile computer device is preferably a smartphone, a tablet computer or a laptop computer. Thereby, it is possible to use the communication and computing capacities already provided in such devices for the purpose of the present invention.

The evaluation and notification means are configured to execute an evaluation algorithm based on the results of a machine-learning algorithm for determining a fall event and/or a loss of consciousness event in real time, wherein the evaluation and notification means are located in the mobile computer device. Notably, with respect to the evaluation of a fall event and/or a loss of consciousness event by means of the evaluation and notification means, it is preferred that in the mobile computer device the results of a machine-learning algorithm are stored. In other words, the results of the machine-learning algorithm are preferably produced prior to the use of the safety system, e.g. preferably in a computer center with a high computing capacity, and the evaluation algorithm for determining a fall event and/or a loss of consciousness event then uses the results of the machine-learning algorithm. However, in an alternative, the results of the machine-learning algorithm for determining a fall event and/or a loss of consciousness event could also be produced by the sensor device or the mobile computer device, i.e. by using the computer capacity of the sensor device or the mobile computer device.

The machine-learning algorithm preferably comprises decision trees, naive bayes classifications, nearest neighbors, neural networks, convolutional neural networks, generative adversarial networks, support vector machines, linear regression, logistic regression, random forest and/or gradient boosting algorithms. Preferably, the machine-learning algorithm is organized to process an input having a high dimensionality into an output of a much lower dimensionality. Such a machine-learning algorithm is termed "intelligent" because it is capable of being "trained". The algorithm may be trained using records of training data. A record of training data comprises training input data and corresponding training output data. The training output data of a record of training data is the result that is expected to be produced by the machine-learning algorithm when being given the training input data of the same record of training data as input. The deviation between this expected result and the actual result produced by the algorithm is observed and rated by means of a "loss function". This loss function is used as a feedback for adjusting the parameters of the internal processing chain of the machine-learning algorithm. For example, the parameters may be adjusted with the optimization goal of minimizing the values of the loss function that result when all training input data is fed into the machine-learning algorithm and the outcome is compared with the corresponding training output data. The result of this training is that given a relatively small number of records of training data as "ground truth", the machine-learning algorithm is enabled to perform its job well for a number of records of input data that higher by many orders of magnitude.

It is preferred that the input data to the evaluation algorithm are at least one of the following data: the sensor data, the maximum acceleration provided by the acceleration sensor, a time dependent course of acceleration provided by the acceleration sensor, the orientation of the sensor means provided by the orientation sensor, the weight of the person using the personal protective equipment, health and medical information of the person using the personal protective equipment, the age of the person using the personal protective equipment and the height of the person using the personal protective equipment. In this respect, it is preferred that the machine-learning algorithm is trained based on these input data. As any movement involves a certain acceleration, it may be concluded from a time dependent course of the acceleration whether the person is still moving or not. Thus, from the time dependent course of the acceleration it may be concluded whether the person fainted and loses consciousness, respectively, or not.

As mentioned above, the evaluation and notification means may be located in the mobile computer device. In this case, the evaluation and notification means are configured to execute the evaluation algorithm even in case the mobile computer device is in a locked state, standby state or idle state. In this respect, it has to be noted that mobile computer devices such as smartphones reduce or limit the number of programs, applications processes and the like running when being in a locked state, standby state or idle state in order to save energy. In order to ensure that the evaluation and notification means properly work throughout the time a person wears the personal protective equipment, the notification means are prevented from being stopped and are configured to execute the evaluation algorithm even in case the mobile computer device is in a locked state, standby state or idle state.

The safety system further comprises a casing configured to receive the mobile computer device, wherein the casing is at least partially made of a material being electrically dissipative.

The term "casing" as used herein refers to any device configured to at least partially encompass the mobile computer device. Particularly, the casing may be designed such that the mobile computer device may be connected thereto such as releasably connected. Thus, the casing may provide protection to the mobile computer device. Particularly, the casing may be configured to prevent an opening of the mobile computer device so as to get access to its secondary battery which might cause a spark.

The term "electrically dissipative" as used herein refers to material characteristics, wherein electric charges are allowed to flow to ground but more slowly in a more controlled manner if compared to electrically conductive materials. If the casing is made of an electrically dissipative material, an explosion due to electrostatic charge of the mobile computer device and/or the casing as a possible ignition source is prevented and the casing is allowed to be used in explosion-protected environments.

The term "material" as used herein refers to a single material as well as a mixture of more than one material.

The material of the casing comprises thermoplastic polyurethane and at least one inorganic filler or at least one halogen-containing polymer and at least one inorganic filler, or at least one thermoplastic polyurethane, at least one halogen-containing polymer and at least one inorganic filler. More preferably, the halogen-containing polymer is a fluorinated polymer such as for example polytetrafluoroethylene, a perfluoro alkoxy polymer or a fluorinated ethylene propylene polymer. Particularly, the casing preferably comprises at least one inorganic filler and at least one thermoplastic polyurethane. The at least one polymer may be selected from the group consisting of polytetrafluoroethylene, perfluoro alkoxy polymers and fluorinated ethylene propylene polymers. Particularly preferred are fluorinated ethylene propylene polymers such as perfluoro ethylene propylene.

The term "thermoplastic polyurethane" as used herein is a broad term and is to be given its ordinary and customary meaning to a person of ordinary skill in the art and is not to be limited to a special or customized meaning. The term specifically may refer, without limitation, to any of a class of polyurethane plastics with many properties, including elasticity, transparency, and resistance to oil, grease and abrasion. Technically, they are thermoplastic elastomers consisting of linear segmented block copolymers composed of hard and soft segments. Thermoplastic polyurethane is a block copolymer consisting of alternating sequences of hard and soft segments or domains formed by the reaction of (1) diisocyanates with short-chain diols (so-called chain extenders) and (2) diisocyanates with long-chain diols. By varying the ratio, structure and/or molecular weight of the reaction compounds, an enormous variety of different thermoplastic polyurethanes can be produced. This allows urethane chemists to fine-tune the polymer's structure to the desired final properties of the material. For example, a greater ratio of hard to soft segments will result in a more rigid thermoplastic polyurethane, while the reverse is also true. The thermoplastic polyurethane may be a polyester-based thermoplastic polyurethane which is mainly derived from adipic acid esters or may be a polyether-based thermoplastic polyurethane which is mainly based on tetrahydrofuran (THF) ethers.

The material of the casing comprises an electrical resistivity of not more than 10⁸ Ωm. With other words, the material of the casing comprises an electrical resistivity of equal to or less than 10⁸ Ωm such as 10⁶ Ωm. Thus, the material comprises suitable electrically dissipative characteristics as it comprises a rather high electrical conductivity. It is to be noted that the electrical resistivity and electrical conductivity, respectively, are defined at a temperature of 20°C unless otherwise stated. The electrical conductivity is adjusted by addition of inorganic fillers.

The casing is attached or attachable to a personal protective equipment. Preferably, the casing may be attached or attachable to a personal protective equipment at a position adjacent to a chest of a person wearing the personal protective equipment. Thus, the mobile computer device received by the casing is well accessible to the person.

Preferably, the safety system further comprises position determination means, preferably a Global Positioning System, and wherein the position determination means are preferably located in the mobile computer device. In this respect, it is preferred to use the already provided means of a smartphone, a tablet computer or a laptop computer, which often comprise a Global Positioning System.

It is preferred that the alert event message comprises at least one of the following information: the sensor data, the maximum acceleration acted on the fallen person, the orientation of the fallen person, the contact data of the fallen person, the contact data of third persons, the weight of the fallen person, the age of the fallen person, health and medical information of the fallen person, the orientation of the unconscious person, position information, a location plan and computer-readable location information data. This provides the rescue center with all the information it needs to make an individually tailored decision on the necessary rescue measures. In addition, a rescue team can be informed about the general state of health, drug intolerances, pre-existing conditions and potential injuries on the way to the fallen person and/or unconscious person. Furthermore, the rescue team can be led to the fallen and/or unconscious person by means of appropriate positioning services, so that the time until the arrival of the rescue team at a fallen and/or unconscious person can be minimized.

It is further preferred that the safety system further comprises a panic button, preferably located at the sensor device, and wherein the safety system is configured to send an alert event message to the rescue coordination center, in case the panic button is pressed for a predetermined period of time. Thereby, a person may call for help even if no fall event has been determined, e.g. in case of a heart attack or if the person stuck.

Alternatively or in addition, the safety system is configured to send an alert event message to the rescue coordination center, in case the panic button is not pressed for a predetermined period of time. For example, some jobs may require that a panic button is pressed from time to time such as at even intervals. If the person does not press the panic button for a predetermined time, a state of unconsciousness of the person may be concluded.

Preferably, the wireless communication means of the safety system are configured to establish a two-way voice communication or a video communication after an alert event message has been sent. Such a communication can be used to determine whether there is actually an emergency or a false alarm. In addition, it can be determined whether the fallen person can still be spoken to or whether the person is imminent to lose consciousness and, if so, the fallen person the person imminent to lose consciousness can be informed and reassured about the rescue measures initiated.

It is further preferred that the safety system further comprises data memory means, preferably located in the mobile computer device, configured to store the sensor data and alert event messages. In this respect, it is further preferred that the data memory means are also configured to store personal data of a person using the personal protective equipment comprising at least one of the following data: the contact data of the person using the personal protective equipment, the contact data of third persons, the weight of the person using the personal protective equipment, the age of the person using the personal protective equipment, health and medical information of the person using the personal protective equipment, and wherein the personal data are provided to the safety system via the wireless communication means or by means of a smart card. For example, a person using a personal protective equipment has to insert a smart card in a respective smart card reader of the safety system, e.g. provided in the mobile computer device. It is also possible to store this data on a central computer device away from the work site, so that this data can be accessed even if, for example, the mobile computer device has been damaged in the fall event and/or a loss of consciousness event. Moreover, it is also possible that some of the personal information, in particular the health and medical information of a person, are stored in an encrypted form and only accessed and forwarded in case of a fall event and/or a loss of consciousness event. Preferably, based on the sensor data, the evaluation and notification means are configured to issue an inspection message indicating that a personal protective equipment has to be inspected or a suspension message indicating that a personal protective equipment may no longer be used. Thereby, it can be ensured that the personal protective equipment is inspected not only on a regular basis, but also when required due to exceptional occurrences, potential material strain or calculated/assumed damages. Moreover, the stored sensor data may also be reviewed during a regular inspection of the personal protective equipment in order to decide whether or in which extend the personal protective equipment, or parts of it, may be further used. Furthermore, the gained information may also be used for determining accident hotspots, what can in turn be used for improving the safety of workspaces.

It is preferred that the safety system comprises a display, preferably the mobile computer device, which is configured to display at least one of the following information: a status of the safety system, battery charging level of the sensor device and/or the mobile computer device, the time until the next inspection of the personal protective equipment has to be done, use restrictions of the personal protective equipment, an inspection message and a suspension message. Thereby, a user can be informed whether or not the personal protective equipment is ready for use, he can review potential use restrictions and so on.

Preferably, the safety system comprises a self-test routine at least checking whether the battery charging level of the sensor device is sufficient for a use and whether the personal protective equipment has to be inspected or is suspended for a use, and wherein based on the results of the self-test routine, the safety system is unblocked for a use or blocked. By means of such a self-test routine, it is possible to provide a further security mechanism by blocking the safety system or a further mechanism of the personal protective equipment making it improper for using the personal protective equipment.

### BRIEF DESCRIPTION OF THE DRAWINGS

In the following, the invention is described exemplarily with reference to the enclosed figures, in which
- Figure 1: is a schematic view of a safety system according to the preferred embodiment of the present invention; and
- Figure 2: is a schematic overview showing the different communication channels and the input and output relationships.

### DETAILED DESCRIPTION OF EMBODIMENTS

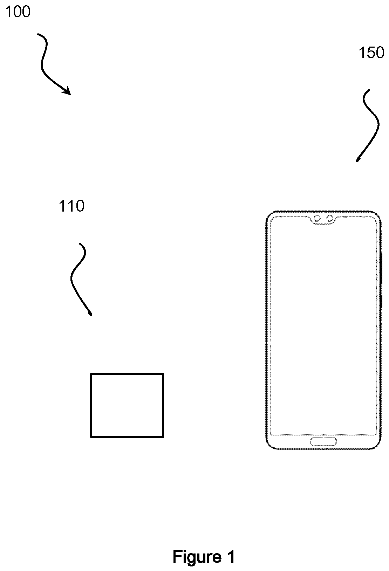

Figure 1 is a schematic view of a safety system 100 according to the preferred embodiment of the present invention. The safety system 100 comprises a sensor device 110 and a mobile computer device 150, wherein in the preferred embodiment the mobile computer device 150 is a smartphone device.

In the shown preferred embodiment, the sensor device 110 comprises sensor means, which in turn are provided by at least one acceleration sensor and at least one orientation sensor. In practice, the sensor device 110 can be arranged in a small pocket on a personal protective equipment or fastened with hook and loop fasteners (Velcro) on a personal protective equipment. It is also possible to use several sensor devices 110 and distribute the sensor devices 110 on the personal protective equipment in different places. The sensor device 110 also comprises communication means, preferably wireless communication means for establishing a communication with the smartphone device 150 and for transmitting the sensor data to the smartphone device 150. The communication means for establishing a communication with the smartphone device 150 are preferably provided by a Bluetooth interface, a Wireless Local Area Network (WLAN) interface and/or a wireless Near Field Communication (NFC) interface. Needless to say, the sensor device 110 may be integrated into the smartphone device 150 as a smartphone usually comprises an acceleration sensor and an orientation sensor.

The smartphone device 150 comprises corresponding communication means for communicating with the sensor device 110 and communication means for establishing a communication with a rescue coordination center which is contacted and notified by the smartphone device 150 in case of a fall event and/or a loss of consciousness event by sending an alert event message. The communication means for establishing a communication with a rescue coordination center are preferably provided by a mobile network interface, a Long Range Wide Area (LoRaWAN) interface, a Low-Power Wide Area Network (LPWAN) and/or a Bluetooth interface. The communication means for establishing a communication with a rescue coordination center are preferably configured to establish a two-way voice communication or a video communication after an alert event message has been sent.

The safety system 100 further comprises a casing configured to receive the mobile computer device 150 such as the smartphone. For example, the smartphone 150 may be releasably connected to or inserted into the casing. The casing is made of a material being electrically dissipative. The material of the casing comprises at least one thermoplastic polyurethane and at least one inorganic filler, or at least one halogen-containing polymer and at least one inorganic filler, or at least one thermoplastic polyurethane, at least one halogen-containing polymer and at least one inorganic filler. More preferably, the halogen-containing polymer is a fluorinated polymer such as for example polytetrafluoroethylene, a perfluoro alkoxy polymer or a fluorinated ethylene propylene polymer. Particularly, the casing preferably comprises at least one inorganic filler and at least one thermoplastic polyurethane. The at least one polymer may be selected from the group consisting of polytetrafluoroethylene, perfluoro alkoxy polymers and fluorinated ethylene propylene polymers. Particularly preferred are fluorinated ethylene propylene polymers such as perfluoro ethylene propylene. The material of the casing comprises an electrical resistivity of not more than 10⁸ Ωm. With other words, the material of the casing comprises an electrical resistivity of equal to or less than 10⁸ Ωm such as 10⁶ Ωm. The casing is attached or attachable to a personal protective equipment. Particularly, the casing is attached or attachable to a personal protective equipment at a position adjacent to a chest of a person wearing the personal protective equipment.

The smartphone device 150 further comprises evaluation and notification means configured to determine a fall event and/or a loss of consciousness event based on the sensor data provided by the sensors of the sensor device 110. In this respect, an evaluation algorithm for determining a fall event and/or a loss of consciousness event in real time is performed by the computing resources of the smartphone 150. The evaluation and notification means are configured to execute the evaluation algorithm even in case the mobile computer device 150 is in a locked state, standby state or idle state.

The used evaluation algorithm is preferably based on the results of a machine-learning algorithm preferably comprising decision trees, naive bayes classifications, nearest neighbors, neural networks, convolutional neural networks, generative adversarial networks, support vector machines, linear regression, logistic regression, random forest and/or gradient boosting algorithms. Preferably, the machine-learning algorithm is organized to process an input having a high dimensionality into an output of a much lower dimensionality. Such a machine-learning algorithm is termed "intelligent" because it is capable of being "trained". The algorithm may be trained using records of training data. A record of training data comprises training input data and corresponding training output data. The training output data of a record of training data is the result that is expected to be produced by the machine-learning algorithm when being given the training input data of the same record of training data as input. The deviation between this expected result and the actual result produced by the algorithm is observed and rated by means of a "loss function". This loss function is used as a feedback for adjusting the parameters of the internal processing chain of the machine-learning algorithm. For example, the parameters may be adjusted with the optimization goal of minimizing the values of the loss function that result when all training input data is fed into the machine-learning algorithm and the outcome is compared with the corresponding training output data. The result of this training is that given a relatively small number of records of training data as "ground truth", the machine-learning algorithm is enabled to perform its job well for a number of records of input data that higher by many orders of magnitude. The results of the machine-learning algorithm are preferably produced prior to the use of the safety system 100, preferably in a computer center with a high computing capacity, and the evaluation algorithm for determining a fall event and/or a loss of consciousness event then uses the results of the machine-learning algorithm.

The input data of the evaluation algorithm are at least one of the following data: the sensor data, the maximum acceleration provided by the acceleration sensor, a time dependent course of acceleration provided by the acceleration sensor, the orientation of the sensor means provided by the orientation sensor, the weight of the person using the personal protective equipment, health and medical information of the person using the personal protective equipment, the age of the person using the personal protective equipment and the height of the person using the personal protective equipment. In this respect, it is preferred that the machine-learning algorithm is trained based on these input data.

Moreover, based on the sensor data, the evaluation and notification means are also configured to issue an inspection message indicating that a personal protective equipment has to be inspected or a suspension message indicating that a personal protective equipment may no longer be used.

In the preferred embodiment, the smartphone device 150 and/or the sensor device 110 further comprises data memory means for storing the sensor data transmitted by the sensor device 110 and the alert event messages. The data memory means are preferably also configured to store personal data of a person using the personal protective equipment equipped with a safety system 100 according to the present invention. These data comprising at least one of the following data: the contact data of the person using the personal protective equipment, the contact data of third persons, the weight of the person using the personal protective equipment, the age of the person using the personal protective equipment, health and medical information of the person using the personal protective equipment.

Moreover, the sensor device 110 and/or the smartphone device 150 further comprises a panic button. In case, the panic button is pressed for a predetermined period of time, e.g. 5 seconds, an alert event message is sent to the rescue coordination center. Thereby, a person may call for help even if no fall event has been determined by the evaluation and notification means, e.g. in case of a heart attack or if the person stuck. Preferably, the smartphone device 150 and/or the sensor device 110 further comprise position determination means, like a Global Positioning System. Alternatively or in addition, in case, the panic button is not pressed for a predetermined period of time, e.g. 1 minute, 2 minutes or even more minutes, an alert event message may be sent to the rescue coordination center. For example, some jobs may require to press the panic button from time to time so as to check whether the person fainted or not.

In the shown preferred embodiment, the display of the smartphone device 150 is configured to display at least one of the following information: a status of the safety system, battery charging level of the sensor device 110 and/or the smartphone device 150, the time until the next inspection of the personal protective equipment has to be done, use restrictions of the personal protective equipment, an inspection message and a suspension message. In this respect, it is preferred that a self-test routine is performed by the computing resources of the smartphone device 150 of the at least checking whether the battery charging level of the sensor device 110 is sufficient for a use and whether the personal protective equipment has to be inspected or is suspended for a use, and wherein based on the results of the self-test routine, the safety system 100 is unblocked for a use or blocked.

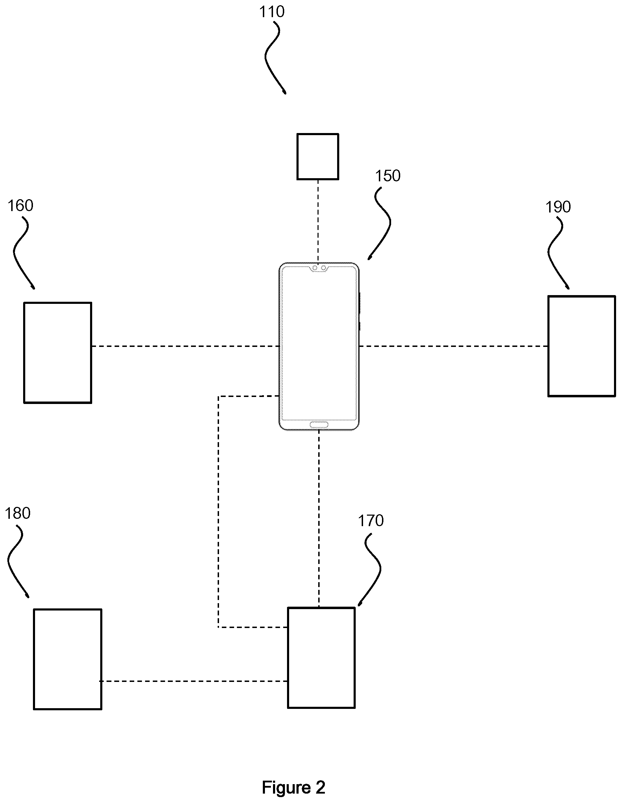

With respect to figure 2, the preferred operation of the safety system 100 is exemplarily explained in the following.

Once the safety device 100 has been unblocked for a use, i.e. after the self-test has been performed, the personal protective equipment can be put on. From this point on, the sensors of the sensor device 110 record the respective data and transmit it to the smartphone device 150 in real time.

In the smartphone device 150, the evaluation and notification means continuously analyze the sensor data in real time determining whether a fall event occurred, i.e. whether the person using the personal protective equipment has been fallen. As explained above, the evaluation and notification means have been provided with the results of the machine-learning algorithm produced prior to the use of the safety system 100 in a computer center 160.

In case, a fall event has been determined by the evaluation and notification means, an alert event message is sent to the rescue coordination center 170 via the wireless communication means of the smartphone device 150. The alert event message preferably comprises the sensor data, the maximum acceleration acted on the fallen person, the orientation of the fallen person, the contact data of the fallen person, the contact data of third persons, the weight of the fallen person, the age of the fallen person, health and medical information of the fallen person, the orientation of the unconscious person, position information, a location plan and computer-readable location information data. Based on this information, the rescue center 170 determines the needed rescue measures. For example, a rescue team 180 can be sent to the fallen and/or unconscious person and further informed can be provided to the rescue team 180, e.g. the general state of health, drug intolerances, pre-existing conditions and potential injuries of the fallen person. The rescue team 180 is preferably also provided with a location plan and computer-readable location information data.

The rescue coordination center 170 may also establish a voice or video communication with the smartphone device 150 after an alert event message has been sent in order to determine whether there is actually an emergency or a false alarm. In addition, it can be determined whether the fallen and/or unconscious person can still be spoken to and, if so, the fallen and/or unconscious person can be informed and reassured about the rescue measures initiated.

Apart from that based on the sensor data, the evaluation and notification means are also configured to issue an inspection message indicating that a personal protective equipment has to be inspected or a suspension message indicating that a personal protective equipment may no longer be used. Thereby, it can be ensured that the personal protective equipment is inspected not only on a regular basis, but also when required due to exceptional occurrences, potential material strain or calculated/assumed damages. Moreover, the stored sensor data may also be reviewed by an inspection staff in an inspection facility 190 during a regular inspection of the personal protective equipment in order to decide whether or in which extend the personal protective equipment, or parts of it, may be further used.

The present invention has been described in conjunction with a preferred embodiment as examples as well. However, other variations can be understood and effected by those persons skilled in the art and practicing the claimed invention, from the studies of the drawings, this disclosure and the claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

### Reference signs

- 100: safety system
- 110: sensor means
- 150: mobile computer device/smartphone
- 160: computer center
- 170: rescue coordination center
- 180: rescue team

### Cited Literature

- WO 2016/011507 A1

## Claims

1. Safety system (100) for use with a personal protective equipment for working in great heights comprising:
wireless communication means configured to provide a communication with a rescue coordination center (170);
sensor means for providing sensor data comprising at least one acceleration sensor and at least one orientation sensor, wherein the sensor means are located in a separate sensor device (110) attachable to a personal protective equipment;
evaluation and notification means configured to determine a fall event and/or a loss of consciousness event based on the sensor data and to notify the rescue coordination center (170) via the wireless communication means by sending an alert event message, a mobile computer device (150), wherein the sensor device (110) and the mobile computer device (150) comprise communication means, wherein the evaluation and notification means are configured to execute an evaluation algorithm based on the results of a machine-learning algorithm for determining a fall event and/or a loss of consciousness event in real time, wherein the wireless communication means, the evaluation and notification means are located in the mobile computer device (150), wherein the evaluation and notification means are configured to execute the evaluation algorithm even in case the mobile computer device (150) is in a locked state, standby state or idle state, wherein the safety system (100) further comprises a casing configured to receive the mobile computer device (150), wherein the casing is made of a material being electrically dissipative, wherein the material of the casing comprises an electrical resistivity of not more than 10⁸ Ωm, wherein the material of the casing comprises at least one thermoplastic polyurethane and at least one inorganic filler, or at least one halogen-containing polymer and at least one inorganic filler, or at least one thermoplastic polyurethane, at least one halogen-containing polymer and at least one inorganic filler, wherein the casing is attached or attachable to a personal protective equipment.

2. Safety system (100) according to claim 1, wherein the sensor device (110) and the mobile computer device (150) comprise wireless communication means, preferably a Bluetooth interface, configured to provide a wireless communication between the sensor device (110) and the mobile computer device (150), wherein the mobile computer device (150) is preferably a smartphone (150), a tablet computer or a laptop computer.

3. Safety system (100) according to claim 1 or 2, wherein input data to the evaluation algorithm are at least one of the following data: the sensor data, the maximum acceleration provided by the acceleration sensor, a time dependent course of acceleration provided by the acceleration sensor, the orientation of the sensor means provided by the orientation sensor, the weight of the person using the personal protective equipment, health and medical information of the person using the personal protective equipment, the age of the person using the personal protective equipment and the height of the person using the personal protective equipment.

4. Safety system (100) according to any one of claims 1 to 3, wherein the casing is attached or attachable to the personal protective equipment at a position adjacent to a chest of a person wearing the personal protective equipment.

5. Safety system (100) according to any one of the preceding claims, wherein the safety system (100) further comprises position determination means, preferably a Global Positioning System, and wherein the position determination means are preferably located in the mobile computer device (150).

6. Safety system (100) according to any one of the preceding claims, wherein the alert event message comprises at least one of the following information: the sensor data, the maximum acceleration acted on the fallen person, the orientation of the fallen person, the contact data of the fallen person, the contact data of third persons, the weight of the fallen person, the age of the fallen person, health and medical information of the fallen person, the orientation of the unconscious person, position information, a location plan and computer-readable location information data.

7. Safety system (100) according to any one of the preceding claims, wherein the wireless communication means comprise at least one of the following communication interfaces:
a Bluetooth interface, a wireless local area interface, a long-range wide area interface and a mobile network interface.

8. Safety system (100) according to any one of the preceding claims, wherein the safety system (100) further comprises a panic button, preferably located at the sensor device (110), and wherein the safety system (100) is configured to send an alert event message to the rescue coordination center, in case the panic button is pressed for a predetermined period of time and/or the panic button is not pressed for a predetermined period of time.

9. Safety system (100) according to any one of the preceding claims, wherein the wireless communication means are configured to establish a two-way voice communication or a video communication after an alert event message has been sent and/or wherein the safety system (100) further comprises data memory means, preferably located in the mobile computer device (150), configured to store the sensor data and alert event messages.

10. Safety system (100) according to claim 9, wherein the data memory means are configured to store personal data of a person using the personal protective equipment comprising at least one of the following data: the contact data of the person using the personal protective equipment, the contact data of third persons, the weight of the person using the personal protective equipment, the age of the person using the personal protective equipment, health and medical information of the person using the personal protective equipment, and wherein the personal data are provided to the safety system (100) via the wireless communication means or by means of a smart card.

11. Safety system (100) according to any one of the preceding claims, wherein based on the sensor data, the evaluation and notification means are configured to issue an inspection message indicating that a personal protective equipment has to be inspected or a suspension message indicating that a personal protective equipment may no longer be used.

12. Safety system (100) according to any one of the preceding claims, wherein the safety system (100) comprises a display, preferably the mobile computer device (150), which is configured to display at least one of the following information: a status of the safety system (100), battery charging level of the sensor device (110) and/or the mobile computer device (150), the time until the next inspection of the personal protective equipment has to be done, use restrictions of the personal protective equipment, an inspection message and a suspension message.

13. Safety system (100) according to any one of the preceding claims, wherein the safety system (100) comprises a self-test routine at least checking whether the battery charging level of the sensor device (110) is sufficient for a use and whether the personal protective equipment has to be inspected or is suspended for a use, and wherein based on the results of the self-test routine, the safety system is unblocked for a use or blocked.

## Patentansprüche

1. Sicherheitssystem (100) zur Verwendung mit einem Körperschutzmittel zum Arbeiten in großen Höhen, Folgendes umfassend:
ein Drahtloskommunikationsmittel, das eingerichtet ist, um eine Kommunikation mit einer Rettungsleitstelle (170) bereitzustellen;
ein Sensormittel zum Bereitstellen von Sensordaten, das mindestens einen Beschleunigungssensor und mindestens einen Orientierungssensor umfasst, wobei das Sensormittel in einer separaten Sensorvorrichtung (110) angeordnet ist, die an einem Körperschutzmittel montierbar ist;
ein Beurteilungs- und Benachrichtigungsmittel, das eingerichtet ist, um ein Sturzereignis und/oder ein Ohnmachtsereignis auf der Grundlage der Sensordaten zu bestimmen und die Rettungsleitstelle (170) über das Drahtloskommunikationsmittel durch Senden einer Alarmereignisnachricht zu benachrichtigen, eine mobile Computervorrichtung (150), wobei die Sensorvorrichtung (110) und die mobile Computervorrichtung (150) ein Kommunikationsmittel umfassen, wobei das Beurteilungs- und Benachrichtigungsmittel eingerichtet ist, um einen Beurteilungsalgorithmus auf der Grundlage der Ergebnisse eines Maschinenlernalgorithmus zum Bestimmen eines Sturzereignisses und/oder eines Ohnmachtsereignisses in Echtzeit ausführen, wobei das Drahtloskommunikationsmittel und das Beurteilungs- und Benachrichtigungsmittel in der mobilen Computervorrichtung (150) angeordnet sind, wobei das Beurteilungs- und Benachrichtigungsmittel eingerichtet ist, um den Beurteilungsalgorithmus auch in dem Fall auszuführen, dass die mobile Computervorrichtung (150) in einem verriegelten Zustand, Bereitschaftszustand oder Ruhezustand ist, wobei das Sicherheitssystem (100) weiterhin ein Gehäuse umfasst, das eingerichtet ist, um die mobile Computervorrichtung (150) aufzunehmen, wobei das Gehäuse aus einem Material angefertigt ist, das elektrisch ableitfähig ist, wobei das Material des Gehäuses einen spezifischen elektrischen Widerstand von nicht mehr als 10⁸ Ωm umfasst, wobei das Material des Gehäuses mindestens ein thermoplastisches Polyurethan und mindestens ein anorganisches Füllmittel oder mindestens ein Halogen-enthaltendes Polymer und mindestens ein anorganisches Füllmittel oder mindestens ein thermoplastisches Polyurethan und mindestens ein Halogen-enthaltendes Polymer und mindestens ein anorganisches Füllmittel umfasst, wobei das Gehäuse an einem Körperschutzmittel angebracht ist oder daran montierbar ist.

2. Sicherheitssystem (100) nach Anspruch 1, wobei die Sensorvorrichtung (110) und die mobile Computervorrichtung (150) ein Drahtloskommunikationsmittel, vorzugsweise eine Bluetooth-Schnittstelle, umfassen, das eingerichtet ist, um eine Drahtloskommunikation zwischen der Sensorvorrichtung (110) und der mobilen Computervorrichtung (150) bereitzustellen, wobei die mobile Computervorrichtung (150) vorzugsweise ein Smartphone (150), ein Tablet-Computer oder ein Laptop-Computer ist.

3. Sicherheitssystem (100) nach Anspruch 1 oder 2, wobei Eingangsdaten in den Beurteilungsalgorithmus mindestens eine Art der folgenden Daten sind: die Sensordaten, die maximale Beschleunigung, die durch den Beschleunigungssensor bereitgestellt wird, ein zeitabhängiger Verlauf der Beschleunigung, die durch den Beschleunigungssensor bereitgestellt wird, die Orientierung des Sensormittels, die durch den Orientierungssensor bereitgestellt wird, das Gewicht der Person, die das Körperschutzmittel verwendet, Gesundheits- und medizinische Informationen der Person, die das Körperschutzmittel verwendet, das Alter der Person, die das Körperschutzmittel verwendet, und die Körpergröße der Person, die das Körperschutzmittel verwendet.

4. Sicherheitssystem (100) nach einem der Ansprüche 1 bis 3, wobei das Gehäuse an einer Position in der Nähe der Brust einer Person, die das Körperschutzmittel trägt, an dem Körperschutzmittel angebracht ist oder dort montierbar ist.

5. Sicherheitssystem (100) nach einem der vorhergehenden Ansprüche, wobei das Sicherheitssystem (100) weiterhin ein Positionsbestimmungsmittel, vorzugsweise ein globales Positionierungssystem, umfasst und wobei das Positionsbestimmungsmittel vorzugsweise in der mobilen Computervorrichtung (150) angeordnet ist.

6. Sicherheitssystem (100) nach einem der vorhergehenden Ansprüche, wobei die Alarmereignisnachricht mindestens eine der folgenden Informationen umfasst: die Sensordaten, die maximale Beschleunigung, die auf die gestürzte Person einwirkte, die Orientierung der gestürzten Person, die Kontaktdaten der gestürzten Person, die Kontaktdaten von dritten Personen, das Gewicht der gestürzten Person, das Alter der gestürzten Person, Gesundheits- und medizinische Informationen der gestürzten Person, die Orientierung der ohnmächtigen Person, Positionsinformationen, ein Lageplan und computerlesbare Lageinformationsdaten.

7. Sicherheitssystem (100) nach einem der vorhergehenden Ansprüche, wobei das Drahtloskommunikationsmittel mindestens eine der folgenden Kommunikationsschnittstellen umfasst: eine Bluetooth-Schnittstelle, eine drahtlose lokale Netzwerkschnittstelle (WLAN), eine weitreichende Weitverkehrsschnittstelle und eine Mobilnetzschnittstelle.

8. Sicherheitssystem (100) nach einem der vorhergehenden Ansprüche, wobei das Sicherheitssystem (100) weiterhin einen Panikknopf umfasst, der vorzugsweise an der Sensorvorrichtung (110) angeordnet ist, und wobei das Sicherheitssystem (100) eingerichtet ist, um in einem Fall, in dem der Panikknopf für eine vorbestimmte Zeitdauer gedrückt wird und/oder der Panikknopf für eine vorbestimmte Zeitdauer nicht gedrückt wird, eine Alarmereignisnachricht an die Rettungsleitstelle zu senden.

9. Sicherheitssystem (100) nach einem der vorhergehenden Ansprüche, wobei das Drahtloskommunikationsmittel eingerichtet ist, um eine Zweiwege-Sprachkommunikation oder -Videokommunikation einzurichten, nachdem eine Alarmereignisnachricht gesendet wurde, und/oder wobei das Sicherheitssystem (100) weiterhin ein Datenspeichermittel umfasst, das vorzugsweise in der mobilen Computervorrichtung (150) angeordnet ist, die eingerichtet ist, um die Sensordaten und Alarmereignisnachrichten zu speichern.

10. Sicherheitssystem (100) nach Anspruch 9, wobei das Datenspeichermittel eingerichtet ist, um persönliche Daten einer Person zu speichern, die das Körperschutzmittel verwendet, die mindestens eine Art der folgenden Daten umfassen: die Kontaktdaten der Person, die das Körperschutzmittel verwendet, die Kontaktdaten von dritten Personen, das Gewicht der Person, die das Körperschutzmittel verwendet, das Alter der Person, die das Körperschutzmittel verwendet, Gesundheits- und medizinische Informationen der Person, die das Körperschutzmittel verwendet, und wobei dem Sicherheitssystem (100) die persönlichen Daten über das Drahtloskommunikationsmittel oder mittels einer Chipkarte bereitgestellt werden.

11. Sicherheitssystem (100) nach einem der vorhergehenden Ansprüche, wobei das Beurteilungs- und Benachrichtigungsmittel eingerichtet ist, um auf der Grundlage der Sensordaten eine Inspektionsnachricht, die angibt, dass ein Körperschutzmittel geprüft werden muss, oder eine Suspendierungsnachricht auszugeben, die angibt, dass ein Körperschutzmittel nicht mehr länger verwendet werden darf.

12. Sicherheitssystem (100) nach einem der vorhergehenden Ansprüche, wobei das Sicherheitssystem (100) eine Anzeige, vorzugsweise die mobile Computervorrichtung (150), umfasst, die eingerichtet ist, um mindestens eine Art der folgenden Informationen anzuzeigen: einen Status des Sicherheitssystems (100), einen Batterieladepegel der Sensorvorrichtung (110) und/oder der mobilen Computervorrichtung (150), die Zeit, bis die nächste Inspektion der Körperschutzmittel durchgeführt werden muss, Gebrauchsbegrenzungen des Körperschutzmittels, eine Inspektionsnachricht und eine Suspendierungsnachricht.

13. Sicherheitssystem (100) nach einem der vorhergehenden Ansprüche, wobei das Sicherheitssystem (100) eine Selbsttestroutine umfasst, die mindestens prüft, ob der Batterieladepegel der Sensorvorrichtung (110) für einen Gebrauch ausreichend ist und ob das Körperschutzmittel geprüft werden muss oder für einen Gebrauch suspendiert ist, und wobei das Sicherheitssystem auf der Grundlage der Ergebnisse der Selbsttestroutine für einen Gebrauch entsperrt oder gesperrt wird.

## Revendications

1. Système de sécurité (100) à utiliser avec un équipement de protection individuelle pour travailler à de grandes hauteurs comprenant :
des moyens de communication sans fil configurés pour assurer la communication avec un centre de coordination de secours (170) ;
des moyens de détection destinés à fournir des données de détection comprenant au moins un capteur d'accélération et au moins un capteur d'orientation, les moyens de détection étant situés dans un dispositif de détection séparé (110) pouvant être attaché à un équipement de protection individuelle ;
des moyens d'évaluation et de signalement configurés pour déterminer un événement de chute et/ou un événement de perte de conscience sur la base des données de détection et pour le signaler au centre de coordination de secours (170) par le biais des moyens de communication sans fil par envoi d'un message d'évènement d'alerte, un dispositif informatique mobile (150), dans lequel le dispositif de détection (110) et le dispositif informatique mobile (150) comprennent des moyens de communication, dans lequel les moyens d'évaluation et de signalement sont configurés pour exécuter un algorithme d'évaluation basé sur les résultats d'un algorithme d'apprentissage automatique pour déterminer un évènement de chute et/ou un événement de perte de conscience en temps réel, dans lequel les moyens de communication sans fil et les moyens d'évaluation et de signalement sont situés dans le dispositif informatique mobile (150), dans lequel les moyens d'évaluation et de signalement sont configurés pour exécuter l'algorithme d'évaluation même au cas où le dispositif informatique mobile (150) serait dans un état verrouillé, un état de veille ou un état inactif, le système de sécurité (100) comprenant en outre un boîtier configuré pour recevoir le dispositif informatique mobile (150), dans lequel le boîtier est constitué d'un matériau électriquement dissipatif, dans lequel le matériau du boîtier présente une résistivité électrique ne dépassant pas 10⁸ Ωm, dans lequel le matériau du boîtier comprend au moins un polyuréthane thermoplastique et au moins une charge inorganique, ou au moins un polymère contenant des halogènes et au moins une charge inorganique, ou au moins un polyuréthane thermoplastique et au moins un polymère contenant des halogènes et au moins une charge inorganique, dans lequel le boîtier est attaché ou peut être attaché à un équipement de protection individuelle.

2. Système de sécurité (100) selon la revendication 1, dans lequel le dispositif de détection (110) et le dispositif informatique mobile (150) comprennent des moyens de communication sans fil, de préférence une interface Bluetooth, configurés pour assurer une communication sans fil entre le dispositif de détection (110) et le dispositif informatique mobile (150), dans lequel le dispositif informatique mobile (150) est de préférence un mobile multifonction (150), une tablette ou un ordinateur portable.

3. Système de sécurité (100) selon la revendication 1 ou 2, dans lequel les données d'entrée de l'algorithme d'évaluation sont au moins une des données suivantes :
les données de détection, l'accélération maximale fournie par le capteur d'accélération, une évolution dans le temps de l'accélération fournie par le capteur d'accélération, l'orientation des moyens de détection fournie par le capteur d'orientation, le poids de la personne utilisant l'équipement de protection individuelle, les informations de santé et médicales de la personne utilisant l'équipement de protection individuelle, l'âge de la personne utilisant l'équipement de protection individuelle et la hauteur de la personne utilisant l'équipement de protection individuelle.

4. Système de sécurité (100) selon l'une quelconque des revendications 1 à 3, dans lequel le boîtier est attaché ou peut être attaché à l'équipement de protection individuelle à une position adjacente à une poitrine d'une personne portant l'équipement de protection individuelle.

5. Système de sécurité (100) selon l'une quelconque des revendications précédentes, le système de sécurité (100) comprenant en outre des moyens de détermination de position, de préférence un système de géolocalisation, et dans lequel les moyens de détermination de position sont de préférence situés dans le dispositif informatique mobile (150).

6. Système de sécurité (100) selon l'une quelconque des revendications précédentes, dans lequel le message d'événement d'alerte comprend au moins une des informations suivantes : les données de détection, l'accélération maximale ayant agi sur la personne qui est tombée, l'orientation de la personne qui est tombée, les données de contact de la personne qui est tombée, les données de contact de tiers, le poids de la personne qui est tombée, l'âge de la personne qui est tombée, les informations de santé et médicales de la personne qui est tombée, l'orientation de la personne inconsciente, des informations de position, un plan d'emplacement et des données d'information d'emplacement lisibles par ordinateur.

7. Système de sécurité (100) selon l'une quelconque des revendications précédentes, dans lequel les moyens de communication sans fil comprennent au moins une des interfaces de communication suivantes : une interface Bluetooth, une interface locale sans fil, une interface étendue à longue portée et une interface de réseau mobile.

8. Système de sécurité (100) selon l'une quelconque des revendications précédentes, le système de sécurité (100) comprenant en outre un bouton panique, de préférence situé au niveau du dispositif de détection (110), et le système de sécurité (100) étant configuré pour envoyer un message d'événement alerte au centre de coordination de secours au cas où le bouton panique serait activé pendant un laps de temps prédéterminé et/ou le bouton panique ne serait pas activé pendant un laps de temps prédéterminé.

9. Système de sécurité (100) selon l'une quelconque des revendications précédentes, dans lequel les moyens de communication sans fil sont configurés pour établir une communication vocale ou une communication vidéo bidirectionnelle après qu'un message d'évènement d'alerte a été envoyé et/ou le système de sécurité (100) comprenant en outre des moyens de mémorisation de données, de préférence situés dans le dispositif informatique mobile (150), configurés pour stocker les données de détection et les messages d'événement d'alerte.

10. Système de sécurité (100) selon la revendication 9, dans lequel les moyens de mémorisation de données sont configurés pour stocker des données personnelles d'une personne utilisant l'équipement de protection individuelle comprenant au moins une des données suivantes : les données de contact de la personne utilisant l'équipement de protection individuelle, les données de contact de tiers, le poids de la personne utilisant l'équipement de protection individuelle, l'âge de la personne utilisant l'équipement de protection individuelle, les informations de santé et médicales de la personne utilisant l'équipement de protection individuelle, et dans lequel les données personnelles sont fournies au système de sécurité (100) par le biais des moyens de communication sans fil ou au moyen d'une carte à puce.

11. Système de sécurité (100) selon l'une quelconque des revendications précédentes, dans lequel, sur la base des données de détection, les moyens d'évaluation et de signalement sont configurés pour délivrer un message d'inspection indiquant qu'un équipement de protection individuelle doit être inspecté ou un message de suspension indiquant qu'un équipement de protection individuelle ne peut plus être utilisé.

12. Système de sécurité (100) selon l'une quelconque des revendications précédentes, le système de sécurité (100) comprenant un écran, de préférence le dispositif informatique mobile (150), qui est configuré pour afficher au moins une des informations suivantes : un état du système de sécurité (100), un niveau de charge de batterie du dispositif de détection (110) et/ou du dispositif informatique mobile (150), le temps jusqu'à ce que la prochaine inspection de l'équipement de protection individuelle doive être effectuée, les restrictions d'utilisation de l'équipement de protection individuelle, un message d'inspection et un message de suspension.

13. Système de sécurité (100) selon l'une quelconque des revendications précédentes, le système de sécurité (100) comprenant une routine d'autotest vérifiant au moins si le niveau de charge de batterie du dispositif de détection (110) est suffisant pour une utilisation et si l'équipement de protection individuelle doit être inspecté ou si son utilisation est suspendue, et le système de sécurité, sur la base des résultats de la routine d'autotest, étant débloqué pour une utilisation ou bloqué.
